# EUROPEAN PATENT SPECIFICATION

(11) **EP 1 081 012 B1**
(45) Date of publication and mention of the grant of the patent: **30.03.2005**
(21) Application number: 00113467.5
(22) Date of filing: 26.06.2000
(51) Int. Cl.: B62B 1/12

(54) **Cart for gardening applications**
Karre für Gartenarbeiten
Chariot pour le jardinage

(30) Priority: 01.09.1999 IT PN990031 U
(43) Date of publication of application: 07.03.2001
(73) Proprietor: UNIFLEX UTILTIME S.p.A., I-33086 Montereale Valcellina (Pordenone) (IT)
(72) Inventor: Borghese, Alladino, 33086 Montereale Valcellina, Pordenone (IT); Magris, Erme, 33086 Montereale Valcellina, Pordenone (IT)
(74) Representative: Giugni, Valter

(56) References cited:
- EP-A- 0 525 868
- EP-A- 0 626 300
- IT-U- 0 222 164
- US-A- 4 974 627
- US-A- 5 046 520
- US-A- 5 056 553

## Description

The present invention refers to an improved cart, which may be adapted to be used in various manners in gardening applications.

Carts used to transport and distribute irrigation hoses in the garden are widely known in the art. These carts are usually constituted by a frame member, on which there is mounted a spool or drum rotating about a horizontal axis for winding and unwinding the watering hose. The frame member comprises a bent tubular element, which forms a handlebar for moving and steering the cart, as well as a bent tubular element forming the portion with which the cart rests on the ground. The handlebar member and the ground resting member of the cart are adapted to fit into two side support members, which the hose winding spool is pivotally hinged on and at the lower extremities of which two wheels are rotatably mounted. A cart of this kind is described for example in EP-A-0 911 292 to the same Applicant.

Carts used for the collection of various materials, such as leaves and rubbish in general, are also known in the art, which are constituted by a tubular framework, provided with handlebar and wheels, on which a waste collection container is mounted removably. The various materials that are picked up from the ground for subsequent disposal are therefore collected into such a container. The container itself is eventually removed from the framework of the cart and unloaded into an appropriate waste dumping site. In a preferred manner, such a container is constituted by a flexible bag. A cart of this kind is described for example in the utility model IT-00 222 164 to the same Applicant.

It would therefore be desirable, and it is actually a main purpose of the present invention, to provide a cart for use in gardening applications, which is versatile enough so as to be capable of being used as a multi-role cart, in that it is capable of being used either as an irrigation-hose winding cart or, alternatively, as a garbage collection cart. The present invention therefore proposes that two types of carts that are currently available as fully separate apparatuses be appropriately unified. A solution of this kind offers a number of significant advantages, both from a construction and an operation point of view, provided of course that it effectively proves simple, reliable and low-cost.

A further purpose of the present invention is to provide a cart which, when it must stay in a resting, but anyway under-load condition, especially for a quite long period of time, does not weigh down with its load on the wheels. In fact, such a condition of static load may make the sizing and, therefore, the strength of the support journals of the wheels a critical factor, in view for instance of the condition in which the cart, when used as a hose winding cart, is left standing unused with several tens of meters of hose wound on the drum thereof.

The invention is set out in claim 1. Advantageous embodiments of the invention are featured in the dependent claims 2 and 3.

The features and advantages of the present invention will anyway be more readily and clearly understood from the description that is given below by way of non-limiting example with reference to the accompanying drawings, in which
- Figure 1 is a front view of the frame of a cart according to the present invention;
- Figure 2 is a side view of the frame of the cart illustrated in Figure 1;
- Figure 3 is a front view of the cart illustrated in Figure 1 in the condition in which it is used as an irrigation-hose winding cart;
- Figure 4 is a side view of the cart illustrated in Figure 3;
- Figure 5 is a front view of the cart illustrated in Figure 1, in the condition in which it is used as a garbage collection cart; and
- Figure 6 is a side view of the cart illustrated in Figure 5.

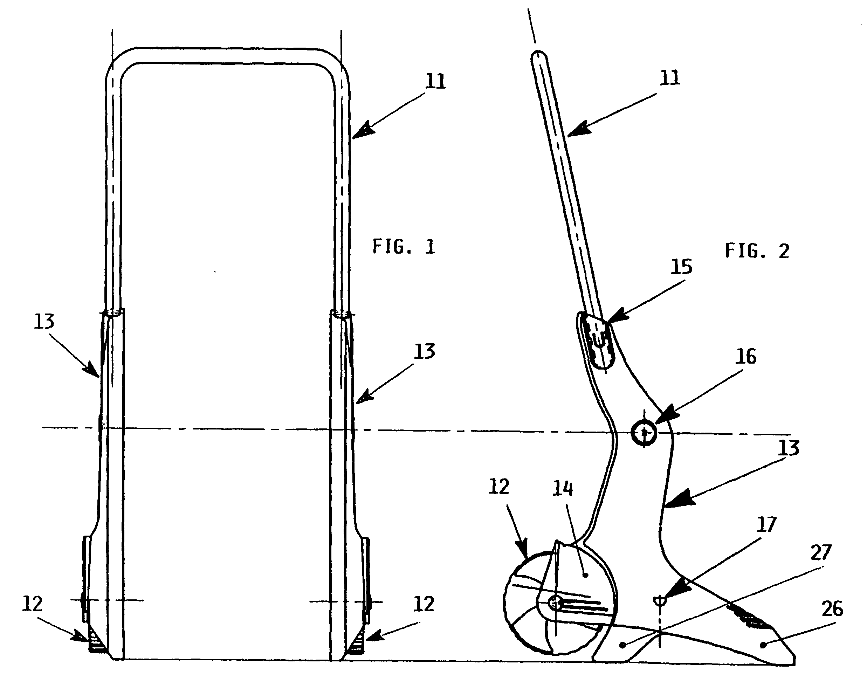

The cart according to the present invention is substantially constituted by a frame comprising a handlebar member 11, two wheels 12 and two side support members 13 (Figures 1 and 2). The handlebar member 11 is usually constituted by a metal tube bent in the shape of a U, but can be made as a profile section of plastic material as well. The wheels 12 are preferably made of moulded plastics and are rotatably hinged on rear extensions 14 of the support members 13. In a preferred manner, also the journals of the wheels 12 are made of plastic material, since the same journals are not provided in a cantilevered or projecting configuration with respect to said extensions 14. The journals can on the other hand be integral or firmly joined with the respective wheels 12.

Also the side support members 13 are usually provided in the form of moulded plastic parts, but are anyway given a particular profile. The upper extremity of each such support member 13 is provided with a receptacle 15 which the corresponding extremity of the handlebar member 11 is capable of snap-fitting into.

In the middle body portion of each support member there is provided a through-hole 16, while a further through-hole 17 is provided in the lower portion of each support member.

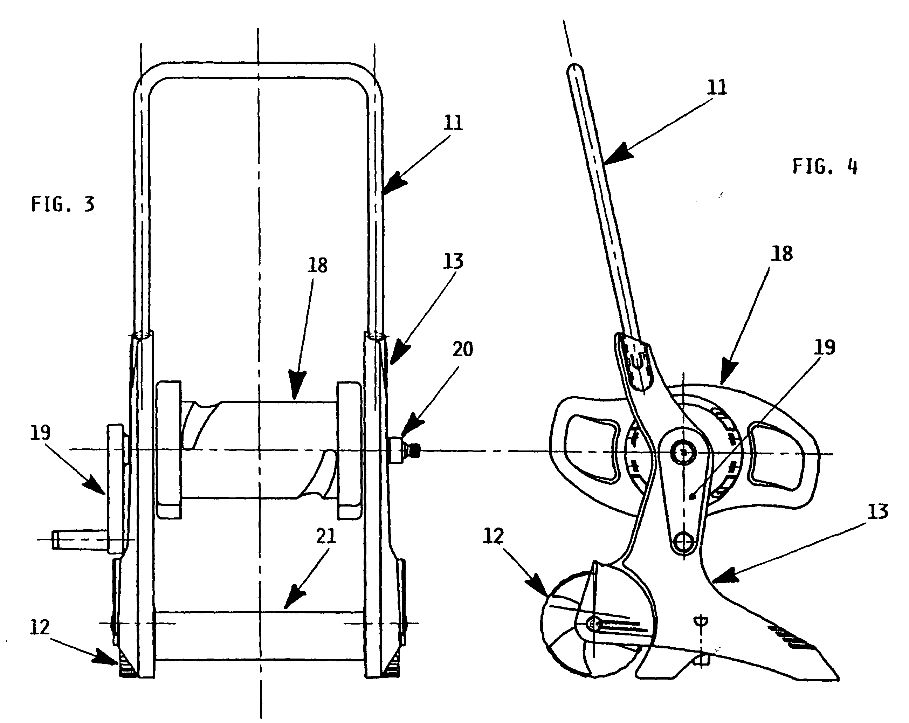

The holes 16 in the two side support members 13 enable respective studs of a hose-winding spool 18 (Figures 3 and 4) to be inserted therein, when the cart is set up to operate as a hose-winding cart. One of such studs carries the handle 19 provided to rotatably actuate the spool 18, whereas the other stud is associated to the threaded connector 20 provided to enable the water supply hose (not shown) to be connected thereto.

The holes 17 in the two side support members 13 again enable respective studs of a cross member 21, which may be constituted by a simple tie-bar or may be in the form of an appropriately shaped tray. Such a solution of the shaped tray is used in particular in those cases in which the cart is set up to operate as a collecting cart. In this case, the tray can serve as a support for the rubbish collection container to rest thereupon, as well as to carry around all such tools and items, such as shears, gloves and the like, as needed in the garden. When the cart is on the contrary used as a hose-winding cart, such a tray can serve as a shelf on which to place the various tools needed for irrigating, such as connectors, sprinklers, spray nozzles, spouts and guns or the like.

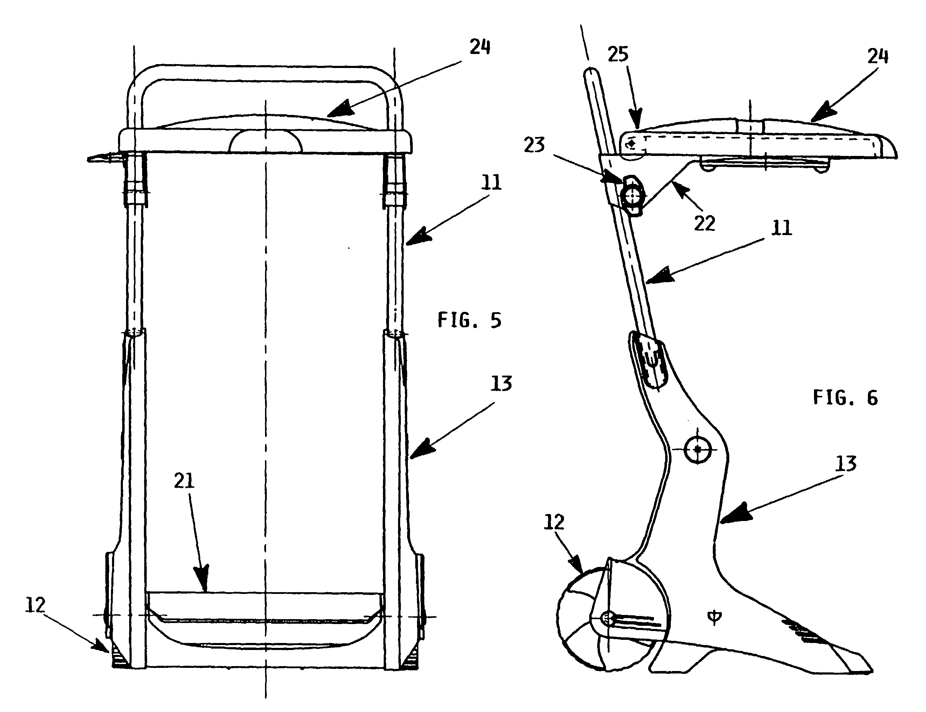

If the cart has to be used as a collecting cart (Figures 5 and 6), on the handlebar member 11 there is hanged a support frame 22, which is fastened thereto by means of cam-type joints 23 in view of enabling the position thereof to be adjusted in its height by allowing it to correspondingly slide along the arms of the handlebar member 11. The container for collecting the rubbish is then removably attached to said support frame 22, wherein said container (not shown in the Figures) may be either of a rigid type moulded out of a suitable plastic material or, preferably, of a flexible bag-like type.

A lid 24 for the collection container is usually connected to the support frame 22 by means of hinges 25, so as to be able to be raised and lowered to open and close, respectively, the same container.

According to a further important feature of the present invention, the particular profile assigned to the side support members 13 enables the wheels 12 of the cart to be relieved when the cart itself is in a static or resting condition (Figures 1 and 2). To this purpose, each support member 13 is provided with two prolongations 26 and 27, which extend down to a lower level than the level at which the respective wheel 12 comes in contact with the ground, said prolongations constituting the actual bearing portions of the cart when the latter is left standing on the ground. It can be readily appreciated that, in order to be able to reach such a result, the centre of gravity of the cart must be situated on a vertical plane, the projection of which on the ground lies within the two bearing portions 26, 27. Such a centre of gravity of the cart may be assumed with reasonable accuracy to lie in the plane containing the axis of the holes 16 of the side support members 13 (Figure 2). For the same cart to be then moved around, the need only arises for the handlebar member 11 to be seized and be inclined backwards, so as to bring the wheels 12 into contact with the ground.

The cart according to the present invention therefore enables the afore stated aims to be fully reached; in particular it can be easily adapted to perform different tasks, thanks to the use of a common frame (handlebar member, side support members, wheels) on which some component parts are able to be alternatively mounted and removed. Such an adaptation is very simple and convenient to be carried out, since all component parts are snap-fitted in position. Moreover, the cart is rational and cost-effective also as far as packaging and transport are concerned. It also complies with environment-safeguard requirements, since the number of its component parts is reduced to a minimum and the material used in the construction thereof may be a single one, such as for example polypropylene.

## Claims

1. Gardening cart, consisting of a frame provided with a handlebar member (11), two side support members (13) and two wheels (12), whereby the frame is adapted to alternatively sustain a winding spool (18) for an irrigation hose or a garbage collection container, a hole (17) being provided in the lower portion of each side support member (13) for the insertion of the support studs of a cross member (21) represented by a simple tie-bar or, alternatively, an appropriately shaped tray.

2. Gardening cart according to claim 1, whereby said side support members (13) are provided with ground resting portions (26, 27) that relieve the wheels (12) when the cart is left standing in a static or resting condition.

3. Gardening cart according to claim 2, whereby said resting portions of each said side support member (13) are constituted by two prolongations (26, 27) extending down to a lower level than the level at which the respective wheel (12) comes in contact with the ground, and the centre of gravity of the cart under static conditions lies in a vertical plane whose projection on the ground lies within said two resting portions (26, 27).

## Patentansprüche

1. Gartenwagen, der aus einem Rahmen, der mit einem Griffstangenelement (11) versehen ist, zwei seitlichen Stützelementen (13) und zwei Rädern (12) besteht, wobei der Rahmen so eingerichtet ist, dass er alternativ eine Aufwickelspule (18) für einen Bewässerungsschlauch oder einen Abfallsammelbehälter trägt, und ein Loch (17) im unteren Abschnitt jedes seitlichen Stützelementes (3) zum Einführen der Haltestifte eines Querelementes (21) vorhanden ist, das durch eine einfache Verbindungsstange oder als Alternative dazu durch eine entsprechend geformte Ablage gebildet wird.

2. Gartenwagen nach Anspruch 1, wobei die seitlichen Stützelemente (13) mit Bodenaufliegeabschnitten (26, 27) versehen sind, die die Räder (12) entlasten, wenn der Wagen in einem unbewegten oder ruhenden Zustand stehen gelassen wird.

3. Gartenwagen nach Anspruch 2, wobei die Aufliegeabschnitte jedes der seitlichen Stützelemente (13) durch zwei Verlängerungen (26, 27) gebildet werden, die sich bis in eine Höhe unter der Höhe erstrecken, an der das entsprechende Rad (12) mit dem Boden in Kontakt kommt, und der Schwerpunkt des Wagens unter statischen Bedingungen in einer vertikalen Ebene liegt, deren Projektion auf dem Boden innerhalb der zwei Aufliegeabschnitte (26, 27) liegt.

## Revendications

1. Chariot de jardinage, consistant en un cadre pourvu d'un élément de guidon (11), deux éléments de support latéraux (13) et deux roues (12), moyennant quoi le cadre est adapté pour soutenir alternativement soit une bobine d'enroulement (18) pour un tuyau d'arrosage, soit un récipient de collecte de déchets, un trou (17) étant prévu dans la partie inférieure de chaque élément de support latéral (13) pour l'insertion des tiges de support d'un élément transversal (21) représenté par une simple entretoise ou, en variante, un plateau de forme appropriée.

2. Chariot de jardinage selon la revendication 1, par lequel lesdits éléments de support latéraux (13) sont pourvus de parties de repos sur le sol (26, 27) qui libèrent les roues (12) lorsque le chariot est laissé vertical dans une condition statique ou de repos.

3. Chariot de jardinage selon la revendication 2, par lequel lesdites parties de repos de chacun desdits éléments de support latéraux (13) sont constituées par deux prolongements (26, 27) s'étendant vers le bas vers un niveau inférieur au niveau auquel la roue (12) respective vient en contact avec le sol, et le centre de gravité du chariot dans des conditions statiques se trouve dans un plan vertical dont la projection sur le sol se trouve dans lesdites deux parties de repos (26, 27).
